# EUROPEAN PATENT APPLICATION

(11) **EP 3 043 246 A1**
(43) Date of publication of application: **13.07.2016**
(21) Application number: 16150450.1
(22) Date of filing: 07.01.2016
(51) Int. Cl.: G06F 3/041, G06K 9/00

(54) **APPARATUS AND METHOD FOR IMPLEMENTING FUNCTIONS OF TOUCH BUTTON AND FINGERPRINT IDENTIFICATION, AND TERMINAL DEVICE**

(30) Priority: 07.01.2015 CN 201510007416; 30.01.2015 CN 201510050893
(71) Applicant: Xiaomi Inc., Beijing 100085 (CN)
(72) Inventor: Zhongsheng, JIANG, 100085 BEIJING (CN); Kun, YANG, 100085 BEIJING (CN); Jun, TAO, 100085 BEIJING (CN)
(74) Representative: Delumeau, François Guy

(57) **Abstract**

An apparatus for implementing functions of touch button and fingerprint identification includes: a fingerprint identification sensor (21) including a plurality of sub-sensors (32) and configured, when an all-in-one switch (23) is open circuited, to transmit signal generated by detection of a plurality of sub-sensors to a fingerprint identification circuitry (22), respectively, and when the all-in-one switch is close circuited, to combine the signal generated by detection of the plurality of sub-sensors into touch signal through the all-in-one switch and transmit the touch signal to a touch button circuitry (24); the fingerprint identification circuitry is configured to process the signal generated by detection of the plurality of sub-sensors; and the touch button circuitry is configured to determine presence of a touch operation according to the combined touch signal. According to the present disclosure, functions of fingerprint identification and touch button are implemented by commonly used fingerprint identification sensors.

## Description

### TECHNICAL FIELD

The present disclosure relates to fields of electronic device, and more particularly, to an apparatus and a method for implementing functions of touch button and fingerprint identification, and a terminal device.

### BACKGROUND

With increasing functions of terminal devices such as mobile phones, more convenience is provided to users by those new functions of terminal devices.

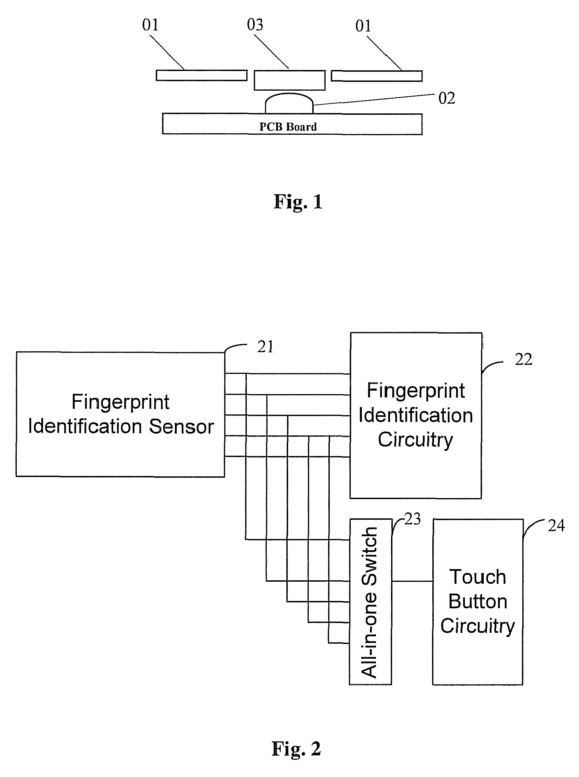

All major manufacturers of terminal devices tend to pay attention to a function of fingerprint identification recently. In conventional terminal devices such as mobile phones, tablet computers, the function of fingerprint identification to be designed is generally combined with adoption of a physical button, a section view of which is shown in Fig. 1, so as to implement compatible functions of button and fingerprint identification. Generally, with such a design, an opening needs to be formed correspondingly in an area of fingerprint identification on a cover glass 01, since a physical button 02 is activated only through a certain travel of press (or, in other words, a certain depth/distance of a stroke/pressure). In this way, when a fingerprint identification sensor 03 is tapped by a user, only a fingerprint may be identified by the system; while when the fingerprint identification sensor 03 is pressed through a certain travel by the user, the physical button 02 may be activated, and two actions including finger-print and button-press may be identified by the system and a corresponding action may be extracted according to needs of an upper-level. However, exterior appearance of the terminal device as a whole is limited by the structure described above, and so is convenience of user operation.

### SUMMARY

In order to overcome problems existing in related art, there are provided an apparatus and a method for implementing functions of touch button and fingerprint identification, and a terminal device, according to embodiments of the present disclosure, so as to improve integration level of the terminal device.

According to a first aspect, the invention relates to an apparatus for implementing functions of touch button and fingerprint identification. The apparatus includes: a fingerprint identification sensor, a fingerprint identification circuitry, an all-in-one switch and a touch button circuitry, wherein the fingerprint identification sensor includes a plurality of sub-sensors;
the plurality of sub-sensors are connected with the fingerprint identification circuitry, respectively, and connected with the all-in-one switch, respectively; the all-in-one switch is connected with the touch button circuitry;
the fingerprint identification sensor is configured, when the all-in-one switch is open circuited, to transmit signal generated by detection of the plurality of sub-sensors to the fingerprint identification circuitry, respectively, and when the all-in-one switch is close circuited, to combine the signal generated by detection of the plurality of sub-sensors into touch signal through the all-in-one switch and transmit the touch signal to the touch button circuitry;
the fingerprint identification circuitry is configured to process the signal generated by detection of the plurality of sub-sensors; and
the touch button circuitry is configured to determine presence of a touch operation according to the combined touch signal.

In one embodiment, the all-in-one switch is open circuited or close circuited according to instruction from a host in a terminal device.

In one embodiment, the plurality of sub-sensors are arranged in a dot matrix or in a rectangular matrix.

In one embodiment, the fingerprint identification circuitry includes:
a signal processing sub-module configured to convert the signal generated by detection of the plurality of sub-sensors into digital signal and transmit the digital signal to a host in a terminal device.

In one embodiment, the fingerprint identification circuitry includes:
an image generation sub-module configured to create a fingerprint image based on the signal generated by detection of the plurality of sub-sensors and transmit the fingerprint image to a host in a terminal device.

In one embodiment, the fingerprint identification circuitry includes:
a comparison sub-module configured to create a fingerprint image based on the signal generated by detection of the plurality of sub-sensors, compare the fingerprint image with a sample image and transmit a comparison result to a host in a terminal device.

In one embodiment, the touch button circuitry includes:
a determination sub-module configured to determine presence of the touch operation according to the combined touch signal and transmit a determination result to a host in a terminal device.

According to a second aspect, the invention relates to a terminal device including any one of the apparatuses for implementing functions of touch button and fingerprint identification described above.

According to a third aspect, the invention relates to a method for implementing functions of touch button and fingerprint identification, which is applicable in a terminal device comprising an all-in-one switch and a fingerprint identification sensor with a plurality of sub-sensors;
wherein the method includes:
switching the all-in-one switch between open circuited and close circuited according to instruction from a host in the terminal device;
processing signal generated by detection of the plurality of sub-sensors when the all-in-one switch is open circuited; and
combining the signal generated by detection of the plurality of sub-sensors into a touch signal through the all-in-one switch when the all-in-one switch is close circuited and determining presence of a touch operation according to the combined touch signal.

In one embodiment, the plurality of sub-sensors are arranged in a dot matrix or in a rectangular matrix.

In one embodiment, the processing signal generated by detection of the plurality of sub-sensors includes:
converting the signal generated by detection of the plurality of sub-sensors into digital signal and transmitting the digital signal to a host in the terminal device.

In one embodiment, the processing signal generated by detection of the plurality of sub-sensors includes:
creating a fingerprint image based on the signal generated by detection of the plurality of sub-sensors and transmitting the fingerprint image to a host in the terminal device.

In one embodiment, the processing signal generated by detection of the plurality of sub-sensors includes:
creating a fingerprint image based on the signal generated by detection of the plurality of sub-sensors, comparing the fingerprint image with a sample image and transmitting a comparison result to a host in the terminal device.

In one embodiment, the determining presence of a touch operation according to the combined touch signal includes:
determining presence of the touch operation according to the combined touch signal and transmitting a determination result to a host in the terminal device.

According to a fourth aspect, the invention relates to a device for implementing functions of touch button and fingerprint identification, characterized in comprising:
a processor; and
a memory for storing instructions executable by the processor;
wherein the processor is configured to perform:
   switching the all-in-one switch between open circuited and close circuited according to instruction from a host in the terminal device;
   processing signal generated by detection of the plurality of sub-sensors when the all-in-one switch is open circuited; and
   combining the signal generated by detection of the plurality of sub-sensors into a touch signal through the all-in-one switch when the all-in-one switch is close circuited and determining presence of a touch operation according to the combined touch signal.

In one particular embodiment, the steps of the method for implementing functions of touch button and fingerprint identification are determined by computer program instructions.

Consequently, according to a fifth aspect, the invention is also directed to a computer program for executing the steps of a method for implementing functions of touch button and fingerprint identification as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

Technical solution according to embodiments of the present disclosure may provide, at least in part, following advantageous effects. Functions of fingerprint identification and touch button are implemented by commonly used fingerprint identification sensors, and external components for implementing the functions of fingerprint identification and touch button are integrated into one component, so that integration level of the electronic device is improved and so is convenience of user operation.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram illustrating a section view of a touch button in a conventional terminal device.
Fig. 2 is a block diagram illustrating an apparatus for implementing functions of touch button and fingerprint identification, according to an exemplary embodiment.
Fig. 3 is a block diagram illustrating a fingerprint identification framework with sub-sensors arranged in a dot matrix, according to an exemplary embodiment.
Fig. 4 is a block diagram illustrating a fingerprint identification framework with sub-sensors arranged in a rectangular matrix, according to an exemplary embodiment.
Fig. 5 is a block diagram illustrating an apparatus for implementing functions of touch button and fingerprint identification, according to an exemplary embodiment.
Fig. 6 is a flow chart illustrating a method for implementing functions of touch button and fingerprint identification, according to an exemplary embodiment.
Fig. 7 is a block diagram illustrating a device for implementing functions of touch button and fingerprint identification applicable in a terminal device, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

Fig. 2 is a block diagram illustrating an apparatus for implementing functions of touch button and fingerprint identification, according to an exemplary embodiment. As shown in Fig. 2, the apparatus includes a fingerprint identification sensor 21, a fingerprint identification circuitry 22, an all-in-one switch 23 and a touch button circuitry 24, wherein the fingerprint identification sensor 21 includes a plurality of sub-sensors.

The plurality of sub-sensors are connected with the fingerprint identification circuitry 22, respectively, and connected with the all-in-one switch 23, respectively. The all-in-one switch 23 is connected with the touch button circuitry 24.

The fingerprint identification sensor 21 is configured, when the all-in-one switch 23 is open circuited, to transmit signal generated by detection of the plurality of sub-sensors to the fingerprint identification circuitry 22, respectively, and when the all-in-one switch 23 is close circuited, to combine the signal generated by detection of the plurality of sub-sensors into touch signal through the all-in-one switch 23 and transmit the touch signal to the touch button circuitry 24.

The fingerprint identification circuitry 22 is configured to process the signal generated by detection of the plurality of sub-sensors.

The touch button circuitry 24 is configured to determine presence of a touch operation according to the combined touch signal.

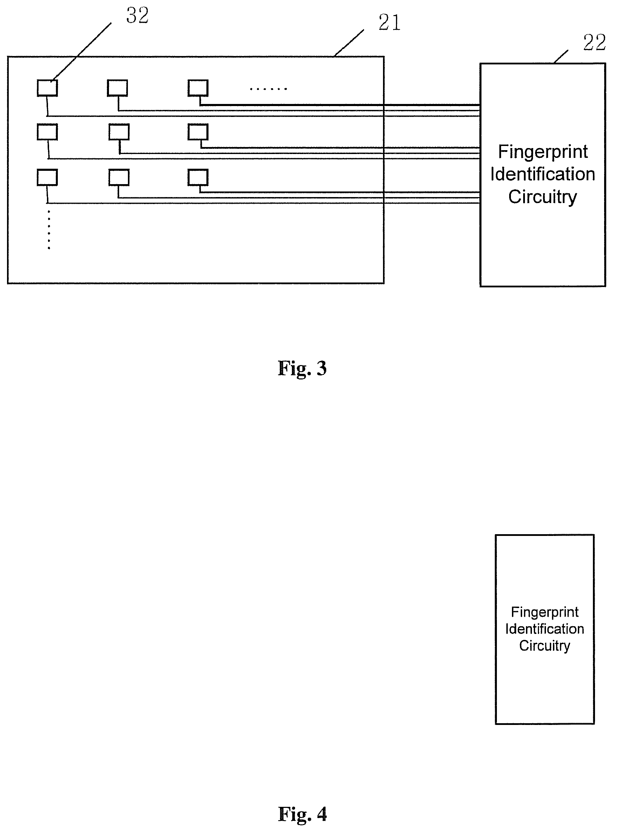

In an embodiment, as shown in Figs. 3 and 4, the plurality of sub-sensors are arranged in a dot matrix or in a rectangular matrix.

The fingerprint identification sensor is provided with a plurality of sub-sensors 32, which are configured to collect information on various subtle (ie. tiny or fine) key nodes of a fingerprint. Thus, a fingerprint image may be restored based on the information on those key nodes, and it is determined whether the fingerprint image is consistent with a sample image through a comparison analysis.

Signal indicative of the fingerprint is transmitted to the fingerprint identification circuitry 22 from a matrix of the sub-sensors, either in a dot matrix or in a rectangular matrix, and then is subject to processes including signal filtering, amplification and AD sampling so as to provide a fingerprint identification chip with a sufficient level of digital signal. However, the matrix of sub-sensors may be unable to provide sufficient signal to detect finger touch due to characteristics of a separate fingerprint identification sensor, such as small size, low level of signal, small area of response area and low sensitivity, so a function of finger touch cannot be normally implemented thereby. Accordingly, the all-in-one switch 23 may be close circuited, and the signal generated by detection of the sub-sensors may be combined into touch signal to be transmitted to the touch button circuitry 24. Thus, signal with sufficient energy level can be provided to the touch button circuitry 24.

Technical solution according to embodiments of the present disclosure may provide, at least in part, following advantageous effects. Functions of fingerprint identification and touch button are implemented by commonly used fingerprint identification sensors, and external components for implementing the functions of fingerprint identification and touch button are integrated into one component, so that integration level of the electronic device is improved and so is convenience of user operation.

### Embodiment I

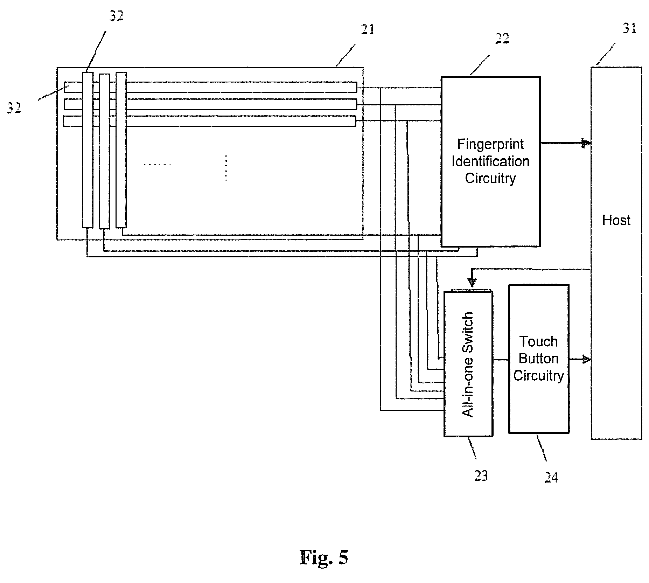

Fig. 5 is a block diagram illustrating an apparatus for implementing functions of touch button and fingerprint identification, according to an exemplary embodiment. As shown in Fig. 5, the apparatus includes a fingerprint identification sensor 21, a fingerprint identification circuitry 22, an all-in-one switch 23 and a touch button circuitry 24, wherein the fingerprint identification sensor 21 includes a plurality of sub-sensors 32 which are arranged in a rectangular matrix. As shown in Fig. 3, the plurality of sub-sensors 32 may be also arranged in a dot matrix.

In the present embodiment, compatible functions of fingerprint identification and touch button are implemented by introducing additional touch button framework via commonly used sensors based on a fingerprint identification framework.

The all-in-one switch 23 is open circuited or close circuited according to instruction from a host 31 in the terminal device. When the fingerprint identification requires to be responded, the all-in-one switch 23 is open circuited, and signal from the respective sub-sensor 32 may be obtained by the fingerprint identification circuitry 22 so as to implement the function of fingerprint identification. Otherwise, when the host 31 is responsive to the function of finger touch, the all-in-one switch 23 is close circuited, and all of the sub-sensors 32 are combined into a massive sensor through which finger touch signal may be obtained by the touch button circuitry 24, so as to implement the function of finger touch. In a particular embodiment, such a massive sensor may be such that all of the sub-sensors 32 are electrically connected to serve as an integrated sensor. According to needs of the host 31 at an upper level, the respective sub-sensors may be combined into the massive sensor in order to provide the touch button circuitry 24 with sufficient energy level of signal and ensure sensitivity, response area and response speed required by the function of finger touch.

In an embodiment, the fingerprint identification circuitry 22 may include:
a signal processing sub-module configured to convert the signal generated by detection of the plurality of sub-sensors 32 into digital signal and transmit the digital signal to the host 31 in the terminal device.

For example, the signal generated by detection of the plurality of sub-sensors 32 may be subject to processes including filtering, amplification and sampling so as to convert the signal generated by detection of the sub-sensors 32 into the digital signal.

In an embodiment, the fingerprint identification circuitry 22 may include:
an image generation sub-module configured to create a fingerprint image based on the signal generated by detection of the plurality of sub-sensors 32 and transmit the fingerprint image to the host 31 in the terminal device.

In an embodiment, the fingerprint identification circuitry 22 may include:
a comparison sub-module configured to create a fingerprint image based on the signal generated by detection of the plurality of sub-sensors 32, compare the fingerprint image with a sample image and transmit a comparison result to the host 31 in the terminal device.

In an embodiment, the touch button circuitry 24 may include:
a determination sub-module configured to determine presence of the touch operation according to the combined touch signal and transmit a determination result to the host 31 in the terminal device.

In the present disclosure, a manner may be adopted where separate ICs (Integrated Circuits) are used for processing signal and sensors are commonly used, as shown in drawings described above. Moreover, a more integrated manner may be adopted also. For example, the all-in-one switch 23 and the touch button circuitry 24 may be integrated into a same IC, the all-in-one switch 23 and the fingerprint identification circuitry 22 may be integrated into a same IC, and the all-in-one switch 23, the fingerprint identification circuitry 22 and touch button circuitry 24 may be integrated into a same IC, so as to provided a solution with a higher level of integration.

Technical solution according to embodiments of the present disclosure may provide, at least in part, following advantageous effects. Functions of fingerprint identification and touch button are implemented by commonly used fingerprint identification sensors, and external components for implementing the functions of fingerprint identification and touch button are integrated into one component, so that integration level of the electronic device is improved and so is convenience of user operation.

A terminal device is further provided by the present disclosure, which includes the apparatus for implementing functions of touch button and fingerprint identification according to any one embodiment described above.

In an embodiment, the terminal device includes the apparatus for implementing functions of touch button and fingerprint identification according to any one embodiment described above and a host.

Technical solution according to embodiments of the present disclosure may provide, at least in part, following advantageous effects. Functions of fingerprint identification and touch button are implemented by commonly used fingerprint identification sensors, and external components for implementing the functions of fingerprint identification and touch button are integrated into one component, so that integration level of the electronic device is improved and so is convenience of user operation.

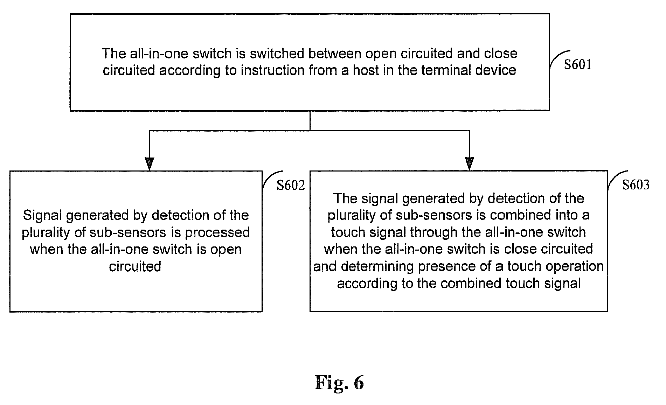

Fig. 6 is a flow chart illustrating a method for implementing functions of touch button and fingerprint identification, which is applicable in a terminal device such as a mobile phone, a tablet computer or the like, according to an exemplary embodiment. The terminal device includes an all-in-one switch and a fingerprint identification sensor with a plurality of sub-sensors. Herein, the plurality of sub-sensors may be arranged in a dot matrix or in a rectangular matrix. As shown in Fig. 6, the method includes steps S601-S603.

In step S601, the all-in-one switch is switched between open circuited and close circuited according to instruction from a host in the terminal device.

In step S602, signal generated by detection of the plurality of sub-sensors is processed when the all-in-one switch is open circuited.

In an embodiment, the step of processing signal generated by detection of the plurality of sub-sensors may include: converting the signal generated by detection of the plurality of sub-sensors into digital signal and transmitting the digital signal to a host in the terminal device.

For example, the signal generated by detection of the plurality of sub-sensors may be subject to processes including filtering, amplification and sampling so as to be converted into the digital signal.

In the present embodiment, the signal generated by detection of the plurality of sub-sensors is converted into the digital signal which is then transmitted to the host in the terminal device. Accordingly, the host in the terminal device can create a fingerprint image based on the digital signal received and compare the fingerprint image with a sample image to obtain a comparison result. Further operations may be performed according to the comparison result. For example, it may be determined whether to unlock the terminal device according to the comparison result, and the terminal device may be unlocked if the comparison result indicates a consistency while the terminal device may be not unlocked if the comparison result indicates an inconsistency.

In an embodiment, the step of processing signal generated by detection of the plurality of sub-sensors may include: creating a fingerprint image based on the signal generated by detection of the plurality of sub-sensors and transmitting the fingerprint image to a host in the terminal device.

In the present embodiment, a fingerprint image is created based on the signal generated by detection of the plurality of sub-sensors and transmitted to the host in the terminal device. Accordingly, the host in the terminal device can compare the fingerprint image with a sample image to obtain a comparison result. Further operations may be performed according to the comparison result. For example, it may be determined whether to unlock the terminal device according to the comparison result, and the terminal device may be unlocked if the comparison result indicates a consistency while the terminal device may be not unlocked if the comparison result indicates an inconsistency.

In an embodiment, the step of processing signal generated by detection of the plurality of sub-sensors may include: creating a fingerprint image based on the signal generated by detection of the plurality of sub-sensors, comparing the fingerprint image with a sample image and transmitting a comparison result to a host in the terminal device.

In the present embodiment, a fingerprint image is created based on the signal generated by detection of the plurality of sub-sensors and compared with a sample image to obtain a comparison result which is then transmitted to the host in the terminal device. Thus, the host in the terminal device can perform further operations according to the comparison result. For example, it may be determined whether to unlock the terminal device according to the comparison result, and the terminal device may be unlocked if the comparison result indicates a consistency while the terminal device may be not unlocked if the comparison result indicates an inconsistency.

In step S603, the signal generated by detection of the plurality of sub-sensors is combined into a touch signal through the all-in-one switch when the all-in-one switch is close circuited and determining presence of a touch operation according to the combined touch signal. For example, the signals generated by detection of the plurality of sub-sensors pass through the all-in-one switch where they are combined into the touch signal.

In an embodiment, the determining presence of a touch operation according to the combined touch signal may include: determining presence of the touch operation according to the combined touch signal and transmitting a determination result to a host in the terminal device.

For example, the all-in-one switch is open circuited or close circuited according to instruction from the host in the terminal device. When the fingerprint identification requires to be responded, the all-in-one switch is open circuited, and signal from the respective sub-sensor may be obtained so as to implement the function of fingerprint identification. Otherwise, when the host is responsive to the function of finger touch, the all-in-one switch is close circuited, and all of the sub-sensors are combined into a massive sensor through which finger touch signal may be obtained, so as to implement the function of finger touch. According to needs of the host at an upper level, the respective sub-sensors may be combined into the massive sensor in order to provide sufficient energy level of signal and ensure sensitivity, response area and response speed required by the function of finger touch.

Technical solution according to embodiments of the present disclosure may provide, at least in part, following advantageous effects. Functions of fingerprint identification and touch button are implemented by commonly used fingerprint identification sensors, and external components for implementing the functions of fingerprint identification and touch button are integrated into one component, so that integration level of the electronic device is improved and so is convenience of user operation.

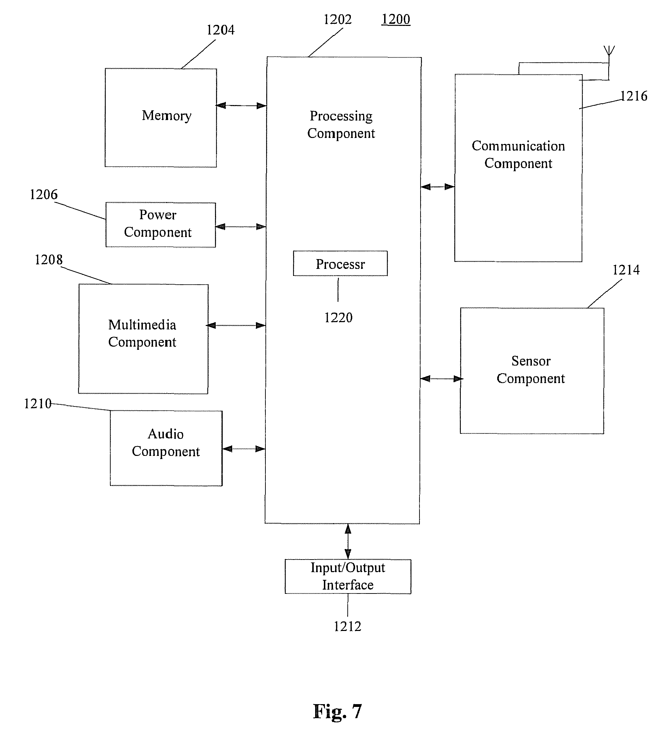

Fig. 7 is a block diagram illustrating a device 1200 for implementing functions of touch button and fingerprint identification, which is applicable in a terminal device, according to an exemplary embodiment. For example, the device 1200 may be a mobile phone, a computer, a digital broadcast terminal, a messaging device, a gaming console, a tablet device, a medical device, exercise equipment, a personal digital assistant, and the like.

Referring to Fig. 7, the device 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the device 1200, such as the operations associated with display, telephone calls, data communications, camera operations, and recording operations. The processing component 1202 may include one or more processors 1220 to execute instructions to perform all or part of the steps in the above described methods. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the device 1200. Examples of such data include instructions for any applications or methods operated on the device 1200, contact data, phonebook data, messages, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the device 1200. The power component 1206 may include a power management system, one or more power sources, and any other components associated with the generation, management, and distribution of power in the device 1200.

The multimedia component 1208 includes a screen providing an output interface between the device 1200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1208 includes a front camera and/or a rear camera. The front camera and the rear camera may receive an external multimedia datum while the device 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone ("MIC") configured to receive an external audio signal when the device 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide status assessments of various aspects of the device 1200. For instance, the sensor component 1214 may detect an open/closed status of the device 1200, relative positioning of components, e.g., the display and the keypad, of the device 1200, a change in position of the device 1200 or a component of the device 1200, a presence or absence of user contact with the device 1200, an orientation or an acceleration/deceleration of the device 1200, and a change in temperature of the device 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor, or a temperature sensor.

The communication component 1216 is configured to facilitate communication, wired or wirelessly, between the device 1200 and other devices. The device 1200 can access a wireless network based on a communication standard, such as WiFi, 2G, or 3G, or a combination thereof. In one exemplary embodiment, the communication component 1216 receives a broadcast signal or broadcast associated information from an external broadcast management system via a broadcast channel. In one exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1204, executable by the processor 1220 in the device 1200, for performing the above-described methods. For example, the non-transitory computer-readable storage medium may be a ROM, a RAM, a CD-ROM, a magnetic tape, a floppy disc, an optical data storage device, and the like.

A device for implementing functions of touch button and fingerprint identification, including:
a processor; and
a memory for storing instructions executable by the processor;
wherein the processor is configured to perform:
   switching the all-in-one switch between open circuited and close circuited according to instruction from a host in the terminal device;
   processing signal generated by detection of the plurality of sub-sensors when the all-in-one switch is open circuited; and
   combining the signal generated by detection of the plurality of sub-sensors into a touch signal through the all-in-one switch when the all-in-one switch is close circuited and determining presence of a touch operation according to the combined touch signal.

The processor is configured to perform: converting the signal generated by detection of the plurality of sub-sensors into digital signal and transmitting the digital signal to a host in the terminal device.

The processor is configured to perform: creating a fingerprint image based on the signal generated by detection of the plurality of sub-sensors and transmitting the fingerprint image to a host in the terminal device.

The processor is configured to perform: creating a fingerprint image based on the signal generated by detection of the plurality of sub-sensors, comparing the fingerprint image with a sample image and transmitting a comparison result to a host in the terminal device.

The processor is configured to perform: determining presence of the touch operation according to the combined touch signal and transmitting a determination result to a host in the terminal device.

A non-transitory computer readable storage medium, when instructions in the storage medium are executed by a processor of a mobile terminal, enables the mobile terminal to perform a method for implementing functions of touch button and fingerprint identification. The method includes:
switching the all-in-one switch between open circuited and close circuited according to instruction from a host in the terminal device;
processing signal generated by detection of the plurality of sub-sensors when the all-in-one switch is open circuited; and
combining the signal generated by detection of the plurality of sub-sensors into a touch signal through the all-in-one switch when the all-in-one switch is close circuited and determining presence of a touch operation according to the combined touch signal.

The processing signal generated by detection of the plurality of sub-sensors may include:
converting the signal generated by detection of the plurality of sub-sensors into digital signal and transmitting the digital signal to a host in the terminal device.

The processing signal generated by detection of the plurality of sub-sensors may include:
creating a fingerprint image based on the signal generated by detection of the plurality of sub-sensors and transmitting the fingerprint image to a host in the terminal device.

The processing signal generated by detection of the plurality of sub-sensors may include:
creating a fingerprint image based on the signal generated by detection of the plurality of sub-sensors, comparing the fingerprint image with a sample image and transmitting a comparison result to a host in the terminal device.

The determining presence of a touch operation according to the combined touch signal may include:
determining presence of the touch operation according to the combined touch signal and transmitting a determination result to a host in the terminal device.

## Claims

1. An apparatus for implementing functions of touch button and fingerprint identification, **characterized in that**, the apparatus comprises: a fingerprint identification sensor (21), a fingerprint identification circuitry (22), an all-in-one switch (23) and a touch button circuitry (24), wherein the fingerprint identification sensor comprises a plurality of sub-sensors (32);
the plurality of sub-sensors are connected with the fingerprint identification circuitry, respectively, and connected with the all-in-one switch, respectively; the all-in-one switch is connected with the touch button circuitry;
the fingerprint identification sensor is configured, when the all-in-one switch is open circuited, to transmit signal generated by detection of the plurality of sub-sensors to the fingerprint identification circuitry, respectively, and when the all-in-one switch is close circuited, to combine the signal generated by detection of the plurality of sub-sensors into touch signal through the all-in-one switch and transmit the touch signal to the touch button circuitry;
the fingerprint identification circuitry is configured to process the signal generated by detection of the plurality of sub-sensors; and
the touch button circuitry is configured to determine presence of a touch operation according to the combined touch signal.

2. The apparatus of claim 1, **characterized in that**, the all-in-one switch is open circuited or close circuited according to instruction from a host (31) in a terminal device.

3. The apparatus of claim 1 or 2, **characterized in that**, the plurality of sub-sensors are arranged in a dot matrix or in a rectangular matrix.

4. The apparatus of any one of claims 1 to 3, **characterized in that**, the fingerprint identification circuitry comprises:
a signal processing sub-module configured to convert the signal generated by detection of the plurality of sub-sensors into digital signal and transmit the digital signal to a host in a terminal device.

5. The apparatus of any one of claims 1 to 4, **characterized in that**, the fingerprint identification circuitry comprises:
an image generation sub-module configured to create a fingerprint image based on the signal generated by detection of the plurality of sub-sensors and transmit the fingerprint image to a host in a terminal device.

6. The apparatus of any one of claims 1 to 5, **characterized in that**, the fingerprint identification circuitry comprises:
a comparison sub-module configured to create a fingerprint image based on the signal generated by detection of the plurality of sub-sensors, compare the fingerprint image with a sample image and transmit a comparison result to a host in a terminal device.

7. The apparatus of any one of claims 1 to 6, **characterized in that**, the touch button circuitry comprises:
a determination sub-module configured to determine presence of the touch operation according to the combined touch signal and transmit a determination result to a host in a terminal device.

8. A terminal device, **characterized in that**, the terminal device comprises the apparatus for implementing functions of touch button and fingerprint identification according to anyone of claims 1-7.

9. A method for implementing functions of touch button and fingerprint identification, **characterized in** being applicable in a terminal device comprising an all-in-one switch and a fingerprint identification sensor with a plurality of sub-sensors;
wherein the method comprises:
switching (S601) the all-in-one switch between open circuited and close circuited according to instruction from a host in the terminal device;
processing (S602) signal generated by detection of the plurality of sub-sensors when the all-in-one switch is open circuited; and
combining (S603) the signal generated by detection of the plurality of sub-sensors into a touch signal through the all-in-one switch when the all-in-one switch is close circuited and determining presence of a touch operation according to the combined touch signal.

10. The method of claim 9, **characterized in that**, the processing signal generated by detection of the plurality of sub-sensors comprises:
converting the signal generated by detection of the plurality of sub-sensors into digital signal and transmitting the digital signal to a host in the terminal device.

11. The method of claim 9 or 10, **characterized in that**, the step of processing the signal generated by detection of the plurality of sub-sensors comprises:
creating a fingerprint image based on the signal generated by detection of the plurality of sub-sensors and transmitting the fingerprint image to a host in the terminal device.

12. The method of any one of claim 9 to 11, **characterized in that**, the step of processing the signal generated by detection of the plurality of sub-sensors comprises:
creating a fingerprint image based on the signal generated by detection of the plurality of sub-sensors, comparing the fingerprint image with a sample image and transmitting a comparison result to a host in the terminal device.

13. The method of any one of claims 9 to 12, **characterized in that**, the step of determining the presence of a touch operation according to the combined touch signal comprises:
determining presence of the touch operation according to the combined touch signal and transmitting a determination result to a host in the terminal device.

14. A computer program including instructions for executing the steps of a method for implementing functions of touch button and fingerprint identification according to any one of claims 9 to 13 when said program is executed by a computer.

15. A recording medium readable by a computer and having recorded thereon a computer program including instructions for executing the steps of a method for implementing functions of touch button and fingerprint identification according to any one of claims 9 to 13..
